(19) Europäisches Patentamt
European Patent Office
Office européen des brevets

(11) **EP 3 448 713 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **17718924.8**

(22) Anmeldetag: **24.04.2017**

(51) Internationale Patentklassifikation (IPC):
**B60L 58/13** (2019.01)    **B60L 50/60** (2019.01)
**B60K 6/485** (2007.10)    **B60W 10/08** (2006.01)
**B60W 10/06** (2006.01)    **B60W 10/22** (2006.01)

(52) Gemeinsame Patentklassifikation (CPC):
**B60L 58/13; B60K 6/485; B60W 10/06; B60W 10/08; B60W 10/22;** B60L 2260/54; B60W 2510/244; B60W 2510/305; B60W 2520/10; B60W 2540/10; B60W 2710/244; Y02T 10/62; Y02T 10/70

(86) Internationale Anmeldenummer:
**PCT/EP2017/059629**

(87) Internationale Veröffentlichungsnummer:
**WO 2017/186628 (02.11.2017 Gazette 2017/44)**

(54) **VERFAHREN ZUM STEUERN EINER ENERGIESPEICHEREINRICHTUNG EINES MILD-HYBRID-KRAFTFAHRZEUGS SOWIE LADEZUSTANDSSTEUEREINRICHTUNG FÜR EIN MILD-HYBRID-KRAFTFAHRZEUG**

METHOD FOR CONTROLLING AN ENERGY STORAGE DEVICE OF A MILD HYBRID MOTOR VEHICLE AND STATE-OF-CHARGE CONTROL DEVICE FOR A MILD HYBRID MOTOR VEHICLE

PROCÉDÉ DE COMMANDE D'UN DISPOSITIF D'ACCUMULATION D'ÉNERGIE D'UN VÉHICULE À MOTEUR SEMI-HYBRIDE ET DISPOSITIF DE COMMANDE D'ÉTAT DE CHARGE POUR UN VÉHICULE À MOTEUR SEMI-HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2016 DE 102016005125**

(43) Veröffentlichungstag der Anmeldung:
**06.03.2019 Patentblatt 2019/10**

(73) Patentinhaber: **Audi AG**
**85045 Ingolstadt (DE)**

(72) Erfinder:
• **JOLY, Matthieu**
**86558 Hohenwart (DE)**
• **GARO, Lanig**
**85057 Ingolstadt (DE)**

(56) Entgegenhaltungen:
WO-A1-2014/099354    DE-A1-102010 034 444
DE-A1-102013 112 678    DE-A1-102014 222 007
DE-T2- 60 117 960    DE-T5-112012 006 106

**Beschreibung**

Die vorliegende Erfindung betrifft ein Verfahren zum Steuern einer Energiespeichereinrichtung eines Mild-Hybrid-Kraftfahrzeugs, wobei die Energiespeichereinrichtung eine Gesamtkapazität aufweist, wobei durch eine Ladezustandssteuereinrichtung der Energiespeichereinrichtung ein Ladezustand der Energiespeichereinrichtung zwischen einem oberen und einem unteren Schwellwert für einen Zielladezustand der Energiespeichereinrichtung eingestellt wird. Sie betrifft überdies eine nicht beanspruchte Ladezustandssteuereinrichtung für ein Mild-Hybrid-Kraftfahrzeug zum Steuern des Ladens einer Energiespeichereinrichtung des Kraftfahrzeugs, wobei die Energiespeichereinrichtung eine Gesamtkapazität aufweist, wobei die Ladezustandssteuereinrichtung ausgelegt ist, einen Ladezustand der Energiespeichereinrichtung zwischen einem oberen und einem unteren Schwellwert für einen Zielladezustandsbereich der Energiespeichereinrichtung einzustellen.

Unter einem Mild-Hybrid-Kraftfahrzeug (MHEV = Mild Hybrid Electric Vehicle) werden Hybridfahrzeuge verstanden, bei denen der Elektroantriebsteil den Verbrennungsmotor zur Leistungssteigerung unterstützt. Als elektromotorische Leistungen werden üblicherweise 6 bis 14 kW/t angegeben. Ein Mild-Hybrid-Kraftfahrzeug kann damit nicht rein elektrisch fahren, wodurch es sich von einem Vollhybrid unterscheidet.

Durch den Einsatz eines Riemenstartergenerators und einer Lithium-Ionen-Batterie als Energiespeichereinrichtung sollen insbesondere die folgenden Merkmale, so genannte MHEV-Features, ermöglicht werden:

- erweiterter StartStopp (StSt): Bei herkömmlichen Kraftfahrzeugen funktioniert die StartStopp-Funktion üblicherweise bis zu einer Geschwindigkeit von 7 km/h. Beim erweiterten StartStopp soll die StartStopp-Funktion bis zu einer Geschwindigkeit von 25 km/h ermöglicht werden. 25 km/h stellt die Grenzgeschwindigkeit zwischen einem unbefeuerten und einem befeuerten Schub dar. Bei herkömmlichen Fahrzeugen muss bei einer Geschwindigkeit unterhalb von 25 km/h das Fahrzeug unter befeuertem Schub betrieben werden, d.h. es muss Kraftstoff eingespritzt werden. Beim erweiterten StartStopp kann beispielsweise beim Abbremsen des Fahrzeugs der Motor früher abgestellt werden, wodurch eine Einsparung von Kraftstoff ermöglicht wird. Die Phase für befeuerten Schub kann dadurch deutlich reduziert werden.

- Freilauf Motor Aus (FMA): Bei dieser Funktion wird ein Ausschalten des Motors bei Geschwindigkeiten zwischen 25 km/h und beispielsweise 160 km/h ermöglicht. Bei herkömmlichen Fahrzeugen würde, wenn der Fahrer in diesem Geschwindigkeitsbereich vom Gas geht, das Fahrzeug durch die Reibung des Motors deutlich verzögern, da der Motor mit den Rädern verbunden ist. Da dies auch gewollt sein kann, beispielsweise wenn das Vorderfahrzeug bremst, kann beim Freilauf Motor Aus vorgesehen sein, dass im Fahrzeug in Abhängigkeit der momentanen Verkehrssituation ermittelt wird, ob der Motor im Freilauf betrieben werden soll oder im Schubbetrieb.

Bei den genannten beiden Funktionen muss durch die Lithium-Ionen-Batterie sichergestellt werden, dass die elektrischen Verbraucher auch bei abgestelltem Motor mit ausreichend Energie versorgt werden. Wo benötigt, kann durch elektrische Energie die Reibung durch Motor und Räder kompensiert werden.

- Schub- und Bremsrekuperation (Reku): Während in Schubphasen eines konventionellen Fahrzeugs der Schub durch Reibung eines unbefeuerten Motors verursacht wird, kann in Mild-Hybrid-Kraftfahrzeugen zusätzlich zum Motorschub oder auch alternativ mittels eines Generators verzögert werden. Hierzu wird üblicherweise ein Riemenstartergenerator verwendet. Durch die Verzögerung mittels des Riemenstartergenerators kann damit Energie erzeugt werden. Eine Rekuperation bis zu 18 kW ist möglich. Die durch den Riemenstartergenerator in einem Mild-Hybrid-Fahrzeug erzeugte Energie kann für eine Boost-Funktion oder zur Lastpunktabsenkung, siehe weiter unten, des Motors verwendet werden. Ein Riemenstartergenerator ermöglicht überdies einen Start bei Geschwindigkeiten über 7 km/h, was beispielsweise mit einem konventionellen Ritzel-Starter nicht möglich wäre.
- Lastpunktverschiebung: In diesem Zusammenhang werden Lade- bzw. Entladekennfelder definiert und zwar aufgespannt über der Drehzahl und einem Fahrerwunschmoment. In Abhängigkeit von der Drehzahl und dem Fahrerwunschmoment wird ein verbrauchsoptimierter Betriebspunkt des Motors definiert.

Dazu wird auf der Basis des Fahrerwunschmoments ein Leistungsbereich des Verbrennungsmotors festgelegt. Aus dem Leistungsbereich wird ein optimales Moment für den jeweiligen Leistungsbereich und eine Drehzahl ermittelt. Da die Anzahl der Leistungsbereiche begrenzt ist, ergibt sich eine Differenz zwischen dem optimalen Moment und dem Fahrerwunschmoment von wenigen Nm. Wenn beispielsweise das abgeleitete optimale Moment nicht ausreicht, um einem Fahrerwunschmoment zu entsprechen, wird der Riemenstartergenerator angesteuert, um ein entsprechendes Differenzmoment (motorisches Moment) zu erzeugen. Dabei handelt es sich um eine Lastpunktabsenkung. Die dazu nötige Energie muss vom Riemenstartergenerator geliefert werden, der dazu elektrische Energie aus der Lithium-Ionen-Batterie entnimmt. Mit anderen Worten: Der Motor liefert weniger Moment als das durch das Fahrerwunschmoment vorgegebene Sollmoment. Die Differenz wird vom Riemenstartergenerator geliefert. Lastpunktabsenkung heißt in diesem Zusammenhang, dass die Last des Motors abgesenkt wird, um Kraftstoff zu sparen. Das Delta wird durch die Riemen-Starter-Generator kompensiert. Bei einem Mild-Hybrid-Fahrzeug kann, wenn ausreichend Energie in der Lithium-Ionen-Batterie vorhanden ist, häufiger eine Lastpunktabsenkung verwendet werden, wodurch sich Kraftstoff einsparen lässt.

Das optimale Moment kann auch größer als das Fahrerwunschmoment sein. Bei einem Mild-Hybrid-Fahrzeug kann dann der Riemen-Starter-Generator entsprechend angesteuert werden, und die Energie zur Erzeugung des Differenzmoments (generatorisches Moment) kann in elektrische Energie umgewandelt werden. Da der Motor in diesem Fall in einem optimalen Betriebspunkt arbeitet, wird die elektrische Energie effizient erzeugt. Dabei handelt es sich um eine gesteuerte Lastpunktanhebung und keine Zwangsladung.

Eine geeignete Betriebsstrategie soll daher sicherstellen, dass möglichst jederzeit genügend Energie in der Lithium-Ionen-Batterie zur Verfügung steht, um die oben genannten MHEV-Features zu gewährleisten. Da die Gesamtkapazität derartiger, in Mild-Hybrid-Fahrzeugen eingesetzter Batterien üblicherweise zwischen 5 Ah und 20 Ah beträgt - und damit im Vergleich zu bei Vollhybriden eingesetzten Batterien sehr niedrig ist - soll die Energie jeweils nur kurzfristig gespeichert werden. In Abhängigkeit des Fahrer- und Streckenprofils sollen die Lade- und Entladephasen so effizient wie möglich aufeinander folgen.

Aus der DE 10 2014 009 448 A1, die zur Formulierung der Oberbegriffe der unabhängigen Patentansprüche herangezogen wurde, ist eine prädiktive Ladezustandssteuerung einer Energiespeichereinrichtung eines elektrisch betriebenen Kraftfahrzeugs bekannt. Dabei werden durch eine Ladezustandssteuereinrichtung der Energiespeichereinrichtung folgende Schritte durchgeführt: Zunächst wird mindestens ein eine Information beinhaltender Datenwert empfangen, wobei die Information eine zu erwartende Fahrsituation auf einem Streckenabschnitt einer Fahrstrecke des Kraftfahrzeugs betrifft. Anhand der empfangenen Information wird ein Energiebedarf einer ersten Einrichtung eines Bordnetzes des Kraftfahrzeugs auf dem Streckenabschnitt prädiziert. Bei Unterschreiten eines vorbestimmten Schwellenwerts des prädizierten Energiebedarfs einer ersten Einrichtung des Bordnetzes wird ein Steuersignal erzeugt, das veranlasst, dass eine für die erste Einrichtung des Bordnetzes reservierte Energiemenge eines Energievorhalts der Energiespeichereinrichtung zumindest teilweise einer zweiten Einrichtung des Bordnetzes zugeteilt wird. Damit wird sichergestellt, dass keine auf dem Streckenabschnitt unnötige Energiereserve für eine Einrichtung eines Bordnetzes des Kraftfahrzeug vorbehalten wird, falls diese Einrichtung auf dem Streckenabschnitt voraussichtlich nicht verwendet wird.

Aus der CA 2 397 074 A1 ist ein Verfahren und eine Vorrichtung zur adaptiven Steuerung eines Energiespeichers eines Vollhybridfahrzeugs bekannt.

Aus der US 2015/0168259 A1 ist ein System und ein Verfahren zur Entwicklung und zum Test von Hybrid-Energiespeichern eines Hybridfahrzeugs bekannt. Dabei wird ein optimaler Ladezustand der Hybrid-Energiespeicher bestimmt. Die genannte Druckschrift beschreibt insbesondere ein System zum Entwickeln, Optimieren und Testen von Hybridenergiespeichervorrichtungen und umfasst eine Testanordnung sowie eine Simulationsvorrichtung. Die Testanordnung hat einen Emulator für eine Hybridenergiespeichervorrichtung, die mit einem Betriebsemulator zum Empfangen und Ausgeben von Energie verbunden ist. Der Emulator umfasst einen ersten Energiespeichervorrichtungsemulator, einen zweiten Energiespeichervorrichtungsemulator und eine Leistungselektronikeinheit, die eine Zurverfügungstellung von Energie in dem ersten und dem zweiten Energiespeichervorrichtungsemulator steuert und ein Entnehmen von Energie aus dem ersten und dem zweiten Energiespeichervorrichtungsemulator steuert. Die Energiespeichervorrichtungsemulatoren emulieren verschiedene Klassen von Energiespeichervorrichtungen und verschiedene Betriebszustände einer Energiespeichervorrichtung durch Variieren der Parameter der Energiespeichervorrichtung. Eine Steuervorrichtung steuert die Leistungselektronikeinheit. Die Simulationsvorrichtung simuliert den Betrieb der Energiespeichervorrichtung für verschiedene Konfigurationen der Steuervorrichtung und verschiedene Energiespeichervorrichtungsparameter.

Schließlich ist aus der WO 00/25417 ein Steuerungsverfahren und eine Vorrichtung für ein Hybridfahrzeug mit einer Verbrennungskraftmaschine bekannt, bei dem durch Tests ein Verhalten eines Hybridenergiespeichers ermittelt wird und eine Steuerung darauf angepasst wird. Der Fokus ist hierbei auf ein Lademoment, d.h. den Wirkungsgrad des Verbrennungsmotors, gerichtet und nicht auf einen Ladezustand.

Die DE 10 2013 112 678 A1 zeigt ein Steuergerät und ein Verfahren zur Steuerung eines Ladezustandes einer Batterie eines Fahrzeuges, wobei elektrische Verbraucher und Stromgeneratoren des Fahrzeuges derart betrieben werden, dass eine variable untere Ladegrenze der Batterie nicht unterschritten und eine variable obere Ladegrenze nicht überschritten wird.

Die DE 10 2010 034 444 A1 zeigt ein Verfahren zum Betrieb eines Elektrofahrzeugs mit Range-Extender, wobei ein tatsächlicher Ladezustand einer elektrischen Energiespeichereinrichtung des Elektrofahrzeugs detektiert und dieser mit einem Schwellenwert für den Ladezustand verglichen wird. Ein Stromerzeugungs-Verbrennungsmotor des Elektrofahrzeugs wird zur Erzeugung elektrischer Energie herangezogen, wenn der detektierte Ladezustand diesen Schwellenwert erreicht beziehungsweise unterschreitet.

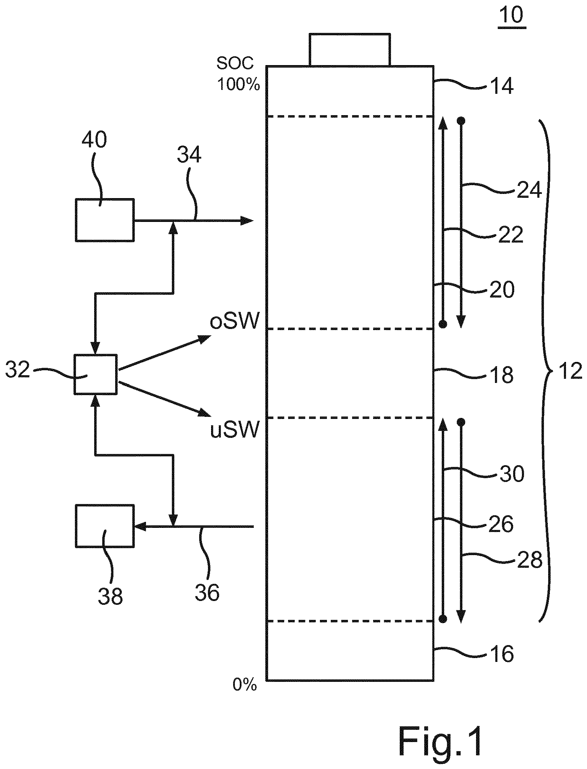

Wenngleich Fig. 1 zur Erläuterung einer Ausführungsform eines erfindungsgemäßen Verfahrens dient, dazu weiter unten mehr, kann sie auch zur Erläuterung einer bekannten Strategie zum Steuern einer Energiespeichereinrichtung 10 eines Mild-Hybrid-Kraftfahrzeugs herangezogen werden. Auf der linken Seite ist der Ladezustand SOC (State Of Charge) der Energiespeichereinrichtung 10 angegeben. Der Ladezustand wird in Prozent vom vollgeladenen Zustand. d.h. der Gesamtkapazität, der Energiespeichereinrichtung 10 angegeben.

Der üblicherweise erlaubte Bereich von Ladezuständen ist mit 12 bezeichnet. Über diesem Bereich befindet sich ein Bereich 14, der aufgrund technologischer Randbedingungen nicht genutzt werden darf. Ein unterer Bereich 16 darf insbesondere deshalb nicht genutzt werden, weil eine Energiereserve vorzuhalten ist, falls das Kraftfahrzeug für eine lange Dauer abgestellt wird. Innerhalb des Bereichs 12 ist ein Zielladezustandsbereich mit 18 bezeichnet. Sein oberer Schwellwert, d.h. die Grenze zwischen den Bereichen 20 und 14, ist mit oSW, sein unterer Schwellwert, d.h. die Grenze zwischen den Bereichen 16 und 26) mit uSW bezeichnet. Der Zielladezustandsbereich 18 wird eingestellt durch entsprechende Steuerung des Sollmoments am Riemenstartergenerator. Der zwischen den Bereichen 18 und 14 gelegene Bereich 20 dient als Reserve für Energierückgewinnungssysteme, beispielsweise Schub- und Bremsrekuperationssysteme. Wie durch den Pfeil 22 gekennzeichnet, kann ausgehend vom Zielladezustandsbereich 18 ein Laden in den Bereich 20 hinein erfolgen durch Energierückgewinnung, wobei als Energiequelle insbesondere kinetische Energie des Kraftfahrzeugs in Betracht kommt. Ein Entladen dieses Energiebereichs 20 erfolgt, wie durch den Pfeil 24 gekennzeichnet, durch Lastpunktabsenkung insbesondere mit dem Ziel, Kraftstoff zu sparen.

Der zwischen den Bereichen 16 und 18 liegende Energiebereich 26 stellt die nötige Energie für die oben genannten MHEV-Features, insbesondere erweiterten StartStopp und Freilauf Motor Aus, zur Verfügung. Wie durch den Pfeil 28 dargestellt, wird dieser Bereich entladen durch die MHEV-Features mit dem Ziel, Kraftstoff zu sparen. Der Pfeil 30 gibt an, dass dieser Bereich durch Lastpunkterhöhung geladen werden kann muss,, wobei als Energiequelle Kraftstoff zu verwenden ist. Wenn also die untere Grenze erreicht ist, muss die Energiespeichereinrichtung 10 - möglichst effizient durch eine geeignete Lastpunktanhebung - geladen werden, um die Verfügbarkeit der MHEV-Features zu gewährleisten.

Die Aufgabe der vorliegenden Erfindung besteht darin, ein eingangs genanntes Verfahren derart weiterzubilden, dass der Wirkungsgrad eines damit ausgestatteten Kraftfahrzeugs verbessert werden kann, insbesondere der Kraftstoffverbrauch sowie der Ausstoß von Schadstoffen reduziert werden kann.

Diese Aufgabe wird gelöst durch ein Verfahren mit den Merkmalen von Patentanspruch 1.

Die vorliegende Erfindung basiert auf der Erkenntnis, dass ein verbesserter Wirkungsgrad erzielt werden kann, wenn der Zielladezustandsbereich optimal gewählt wird. Ein zu hoch gewählter Zielladezustandsbereich - gemeint sind die Bereichsgrenzen innerhalb der schematisch in Fig. 1 dargestellten Energiespeichervorrichtung 10 - würde weniger Reserve für eine effiziente Energierückgewinnung belassen. Stattdessen würde ineffizient Kraftstoff in elektrische Energie umgewandelt. Ein zu niedrig gewählter Zielladezustandsbereich würde die Verwendung der MHEV-Features einschränken bzw. die Abdeckung des Bordnetzbedarfs nicht mehr gewährleisten. Dies müsste dann durch eine Lastpunktanhebung behoben werden und würde deshalb wiederum in einer ineffizienten Umwandlung von Kraftstoff in elektrische Energie resultieren.

Optimale Ergebnisse lassen sich erzielen, wenn der Zielladezustandsbereich so groß wie möglich und so klein wie nötig ist. Wie der Zielladezustandsbereich innerhalb dieser Vorgabe optimal zu wählen ist, lehrt die Erfindung: Erfindungsgemäß ist der aktiv nutzbare Bereich der Energiespeichereinrichtung 10 in drei Bereiche unterteilt. Wie bereits erwähnt, dient der Bereich 20 als Reserve für die Features mit Energierückgewinnung, d.h. Vorrichtungen, die Energie rückspeisen können, beispielsweise Brems- oder Schubrekuperation sowie elektronisches Fahrwerk. Durch eine geeignete Dimensionierung dieses Bereichs 20 lässt sich der obere Schwellwert oSW des Zielladezustandsbereichs 18 von oben herab definieren. Der Bereich 26 dient als Reserve für die Features, die Energie konsumieren, beispielsweise StartStopp, Freilauf Motor Aus, eFahrwerk, eTurbo. Durch eine geeignete Dimensionierung dieses Bereichs 26 lässt sich der untere Schwellwert uSW für den Zielladezustandsbereich 28 von unten ausgehend definieren. Die Reservebereiche 20 und 26 müssen jeweils so groß wie nötig und so klein wie möglich sein. Höhere Reserven führen zu einem höheren Einsatz von Kraftstoff und reduzieren daher den Wirkungsgrad.

Erfindungsgemäß ist nunmehr zur Dimensionierung der Bereiche 26 und 20 und damit zur Festlegung des Zielladezustandsbereichs vorgesehen, dass während mindestens einer Fahrt mindestens ein Lade- und ein Entladevorgang mit Bezug auf mit der Energiespeichereinrichtung ausgetauschte Energiemengen überwacht und daraus mit einer vorgebbaren Wahrscheinlichkeit zu erwartende Energiemengen für zukünftige Lade- und Entladevorgänge ermittelt werden. Basierend auf diesen Ermittlungen werden dann der obere und der untere Schwellwert für den Zielladezustandsbereich der Energiespeichereinrichtung festgelegt.

Eine bevorzugte Ausführungsform zeichnet sich dadurch aus, dass die mindestens eine Fahrt in Schritt b) an einer Recheneinrichtung simuliert wird. Alternativ kann die mindestens eine Fahrt in Schritt b) an einem realen Kraftfahrzeug durchgeführt werden. Auf diese Weise lassen sich automatisch beliebige Fahrzeugparameter bei der Ermittlung des optimalen Zielladezustandsbereichs berücksichtigen. Dies resultiert in einer besonders guten Adaption des Zielladezustandsbereichs an ein spezielles Fahrzeug, insbesondere auch an einen speziellen Fahrzeugtyp, an dessen Serienbereifung, cw-Wert, und dergleichen, und resultiert daher in einer Steigerung der Effizienz des Kraftfahrzeugs. Der Vorteil der Simulation besteht in einer präzisen Reproduzierbarkeit der Simulationsergebnisse. Eine Ermittlung am Beispiel einer realen Fahrt hat den Vorteil, dass Ungenauigkeiten bei der Erstellung der Simulationsparameter vermieden werden.

Es ist besonders bevorzugt, wenn die mindestens eine Fahrt nach einem vorgebbaren, insbesondere genormten Fahrzyklus durchgeführt wird. Auf diese Weise lassen sich weitgehend reproduzierbare, an das spezielle Kraftfahrzeug besonders optimal angepasste Schwellwerte für den Zielladezustandsbereich ermitteln.

Schritt b) kann vor Auslieferung des Kraftfahrzeugs und/oder fortlaufend, insbesondere in vorgebbaren zeitlichen Abständen oder zu vorgebbaren Ereignissen, während der Benutzung des Kraftfahrzeugs durchgeführt werden. Insbesondere durch die fortlaufende Nutzung kann eine Anpassung an sich ändernde Fahrzeugparameter oder sich ändernde Betriebsbedingungen, beispielsweise Straßenbelag, Wetter, Gewicht der Fahrzeugladung, vorgenommen werden.

Bei der Festlegung in Schritt c) wird erfindungsgemäß ein oberer, nicht nutzbarer Ladebereich der Energiespeichereinrichtung und ein unterer, nicht nutzbarer Ladebereich der Energiespeichereinrichtung, sowie weiterhin ein oberer Deratingbereich (Deratingbereich volle Batterie) und ein unterer Deratingbereich (Deratingbereich leere Batterie) der Energiespeichereinrichtung, berücksichtigt. Ein Deratingbereich unterscheidet sich von einem nicht nutzbaren Bereich dadurch, dass ein Deratingbereich prinzipiell genutzt werden kann, seine Nutzung aber möglichst vermieden werden soll. In einem Deratingbereich ist die Batterieleistung reduziert.

Bevorzugt wird in Schritt b) als Ladevorgang mindestens einer der folgenden Ladevorgänge erfasst: Laden, insbesondere Rückspeisen, durch ein elektrisches Fahrwerk; Laden, insbesondere Rekuperieren, durch eine Schub- und/oder Bremsrekuperationsvorrichtung; sowie Laden, insbesondere Rückspeisen, durch eine elektromechanische aktive Wankstabilisierung.

Es ist weiterhin bevorzugt, wenn in Schritt b) als Entladevorgang mindestens einer der folgenden Entladevorgänge erfasst wird: Entladen durch einen elektronischen Abgasverdichter; Entladen durch das Bordnetz; Entladen zur Aufrechterhaltung eines vorgebbaren zeitlichen Abstands zu einem Stoppverbot eines Verbrennungsmotors des Kraftfahrzeugs; sowie Entladen während einer Aktivierungszeit eines Riemenstartergenerators des Kraftfahrzeugs, in der dieser nicht für Ladevorgänge bereitsteht.

Erfindungsgemäß wird demnach in Schritt c) der obere Schwellwert für den Zielladezustandsbereich festgelegt wie folgt: oberer Schwellwert = Gesamtkapazität - (oberer, nicht nutzbarer Energiebereich (Ladebereich)) - (erwartete Energiemenge für Ladevorgänge gemäß Schritt b)). Weiterhin wird in Schritt c) der untere Schwellwert für den Zielladezustandsbereich festgelegt wie folgt: unterer Schwellwert = unterer, nicht nutzbarer Energiebereich (Ladebereich) + (erwartete Energiemenge für Entladevorgänge gemäß Schritt b)). Der jeweilige Deratingbereich kann, soweit vorgesehen und so gewünscht, als nicht nutzbarer Energiebereich berücksichtigt werden.

Bei einer besonders bevorzugten Weiterbildung wird Schritt b) in Abhängigkeit der Fahrzeugausstattung des Kraftfahrzeugs durchgeführt und in Schritt c) der obere und untere Schwellwert für den Zielladezustandsbereich in Abhängigkeit der Fahrzeugausstattung festgelegt. Insbesondere sind hier Vorrichtungen der Fahrzeugausstattung zu berücksichtigen, die die Energiespeichereinrichtung laden und entladen, also insbesondere die Vorrichtungen, deren Lade- und Entladevorgänge, siehe weiter oben, in Schritt b) zu berücksichtigen sind. Für unterschiedliche Fahrzeugausstattungen ergeben sich dadurch unterschiedliche optimale Zielladezustandsbereiche.

Weitere bevorzugte Ausführungsformen ergeben sich aus den Unteransprüchen.

Im Nachfolgenden werden nunmehr Ausführungsbeispiele der vorliegenden Erfindung unter Bezugnahme auf die beigefügten Zeichnungen näher beschrieben. Diese zeigen in:

Fig. 1    eine schematische Darstellung zur Erläuterung eines Ausführungsbeispiels eines erfindungsgemäßen Verfahrens zum Steuern einer Energiespeichereinrichtung eines Mild-Hybrid-Kraftfahrzeugs;

Fig. 2    den zeitlichen Verlauf verschiedener Parameter eines Kraftfahrzeugs bei der Durchführung eines Ausführungsbeispiels eines erfindungsgemäßen Verfahrens;

Fig. 3    in tabellarischer Form die bei der Durchführung eines Ausführungsbeispiels des erfindungsgemäßen Verfahrens gewonnenen Ergebnisse; und

Fig. 4    in schematischer Darstellung ein Signalablaufdiagramm für ein Ausführungsbeispiel eines erfindungsgemäßen Verfahrens.

Im Nachfolgenden werden für gleiche und gleichwirkende Bauelemente dieselben Bezugszeichen verwendet.

Gemäß einem bevorzugten Ausführungsbeispiel weist die in Fig. 1 dargestellte Energiespeichereinrichtung 10 eine Gesamtkapazität von 9,6 Ah auf. Bei einer Nennspannung von 48,1 V entspricht die in der Energiespeichereinrichtung gespeicherte Gesamtenergie 461 Wh.

Wie bereits erwähnt, betrifft die vorliegende Erfindung ein Verfahren zum Steuern einer Energiespeichereinrichtung eines Mild-Hybrid-Kraftfahrzeugs. Bei einem PHEV (Plug-In Hybrid Electric Vehicle) werden Batterien mit deutlich größerer Kapazität verwendet. Bei PHEVs ist der untere Schwellwert uSW belanglos, da wegen der Batteriegröße der obere Schwellwert oSW durch Rekuperation nicht erreicht wird. Aufgrund der sehr viel größeren Kapazität betragen die Bereiche 14 und 16 bei PHEVs lediglich 2% der Gesamtkapazität der jeweiligen Energiespeichereinrichtung. Bei einem Mild-Hybrid-Kraftfahrzeug, wie vorliegend, ist jedoch die Energiespeichereinrichtung 10 aus Gründen der Gewichtsersparnis, wie erwähnt, sehr klein dimensioniert. Aus diesem Grund lassen sich Ladestrategien von PHEVs nicht auf MHEVs übertragen.

Ein Mild-Hybrid-Kraftfahrzeug kann im Gegensatz zu einem Plug-in-Hybrid-fahrzeug nur über den Generator des Kraftfahrzeugs geladen werden. Eine Ladung der Energiespeichereinrichtung durch eine externe Quelle ist bei einem Mild-Hybrid-Kraftfahrzeug nicht möglich.

Erfindungsgemäß wird während mindestens einer Fahrt mindestens ein Lade- und ein Entladevorgang mit Bezug auf mit der Energiespeichereinrichtung 10 ausgetauschte Energiemengen überwacht und daraus mit einer vorgebbaren Wahrscheinlichkeit zu erwartende Energiemengen für zukünftige Lade- und Entladevorgänge ermittelt. Basierend auf diesen Ermittlungen werden von der Ladezustandssteuereinrichtung 32 der obere und der untere Schwellwert oSW, uSW für den Zielladezustandsbereich (Ziel-SOC) 18 der Energiespeichereinrichtung 10 festgelegt. Zu diesem Zweck wird als Ladevorgang mindestens ein Ladevorgang 34 durch eine Energierückgewinnungsvorrichtung 40 erfasst. Dabei kann es sich um die Rückspeisung durch ein elektrisches Fahrwerk handeln, um eine Rückspeisung durch eine Schub- und/oder Bremsrekuperationsvorrichtung oder um eine Rückspeisung durch eine elektromechanische aktive Wankstabilisierung. In gleicher Weise wird als Entladevorgang mindestens ein Entladevorgang 36 durch eine Entladevorrichtung 38 erfasst. Dabei kann es sich um das Entladen durch einen elektronischen Abgasverdichter, das Entladen durch das Bordnetz, das Entladen zur Aufrechterhaltung eines vorgebbaren zeitlichen Abstands zu einem Stoppverbot des Verbrennungsmotors oder das Entladen während einer Aktivierungszeit eines Riemenstartergenerators des Kraftfahrzeugs, in der dieser nicht für Ladevorgänge bereitsteht, handeln.

Hieraus ergibt sich, dass die Erfassung der Lade- und Entladevorgänge in Abhängigkeit der Fahrzeugausstattung durchgeführt wird, d.h. wenn beispielsweise das Fahrzeug in der speziellen Ausstattung keinen elektronischen Abgasverdichter aufweist, werden auch keine Entladevorgänge durch diese Vorrichtung erfasst. Dies führt dazu, dass für die spezielle Fahrzeugausstattung ein optimaler Zielladezustandsbereich durch eine optimale Festlegung des oberen und unteren Schwellwerts oSW, uSW erfolgt. Die Energiespeichereinrichtung 10 kann daher fahrzeugausstattungsabhängig optimal genutzt werden.

Die oben erwähnten, vorgebbaren Wahrscheinlichkeiten können beispielsweise derart festgelegt werden, dass der Zielladezustandsbereich 18 derart festzulegen ist, dass der momentane Ladezustand nur in weniger als 10% der Zeitdauer, bevorzugt in weniger als 5% der Zeitdauer außerhalb der durch den oberen und unteren Schwellwert oSW, uSW des Zielladezustandsbereichs 18 vorgegebenen Grenzen liegen darf.

Es kann vorgesehen sein, dass die Ermittlung der Lade- und Entladevorgänge vor Auslieferung des Kraftfahrzeugs erfolgt. Es kann jedoch auch vorgesehen sein, dass diese fortlaufend, insbesondere in vorgebbaren zeitlichen Abständen oder zu vorgebbaren Ereignissen, während der Benutzung des Kraftfahrzeugs durchgeführt werden. Auf diese Weise kann beispielsweise bei einem dynamischen Fahrer berücksichtigt werden, dass er häufiger den elektronischen Abgasverdichter in Anspruch nimmt, sodass die für den elektronischen Abgasverdichter reservierte Energiemenge dann entsprechend angehoben wird. Entsprechend können die für andere Lade- und Entladevorrichtungen reservierten Energiemengen fahrerspezifisch oder streckenspezifisch oder witterungsspezifisch oder beladungsspezifisch modifiziert werden, um so die Ladestrategie für eine Energiespeichereinrichtung 10 zu optimieren.

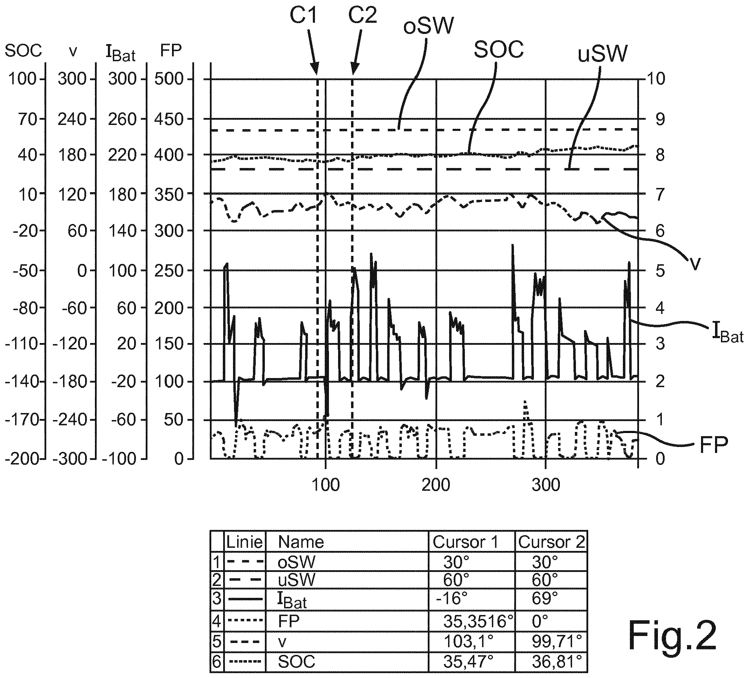

Fig. 2 zeigt in schematischer Darstellung den zeitlichen Verlauf verschiedener, für die vorliegende Erfindung relevanter Parameter bei der Durchführung des erfindungsgemäßen Verfahrens. Auf der linken Seite der Darstellung sind die Wertebereiche für den Ladezustand SOC, die Geschwindigkeit v, den Batteriestrom $I_{Bat}$ sowie die Fahrpedalstellung FP angegeben. In der Mitte der Darstellung ist der zeitliche Verlauf der genannten vier Größen angegeben. Überdies ist der obere Schwellwert oSW und der untere Schwellwert uSW für den Zielladezustandsbereich 18 eingezeichnet. Weiterhin sind zwei Cursorpositionen C1, C2 eingezeichnet. Die zu den Cursorpositionen C1, C2 ermittelten Werte für den Ladezustand SOC, den Batteriestrom $I_{Bat}$, die Geschwindigkeit v sowie die Fahrpedalstellung FP sind auf der rechten Seite der Darstellung von Fig. 2 angegeben.

Wie deutlich zu erkennen ist, findet in den Phasen, in denen sich das Fahrpedal FP in Ruhestellung befindet, d.h. FP=0, eine Rekuperation durch Schub- und/oder Bremsbetrieb statt, erkennbar an den positiven Werten des Batteriestroms $I_{Bat}$, die demnach zur Ladung der Energiespeichereinrichtung 10 führen.

Gemäß Fig. 2 liegt der Zielladezustandsbereich konstant zwischen 30 und 60 % (relativ) der Gesamtkapazität der Energiespeichereinrichtung 10. Der untere Schwellwert uSW beträgt hier 30% der Gesamtkapazität, der obere Schwellwert 60% der Gesamtkapazität. Der Bordnetzbedarf beträgt konstant $I_{Bat}$= -16A. Der aktuelle Ladezustand SOC stößt zu keiner Zeit gegen den oberen Schwellwert oSW bzw. den unteren Schwellwert uSW des Zielladezustandsbereichs 18. Würde der aktuelle Ladezustand SOC den oberen Schwellwert oSW erreichen, könnten zu diesem Zeitpunkt keine Ladevorgänge durch Energierückgewinnungssysteme mehr vorgenommen werden, sodass deren Energie nicht mehr genutzt werden könnte. Würde der untere Schwellwert uSW erreicht werden, müsste eine Lastpunktanhebung durch Aktivieren des Brennstoffmotors vorgenommen werden. Dadurch wird Kraftstoff verbraucht, wodurch der Wirkungsgrad des Antriebs des Kraftfahrzeugs reduziert wird. Mit anderen Worten wird in dem dargestellten zeitlichen Abschnitt kein Kraftstoff zum Laden der Energiespeichereinrichtung 10 eingesetzt. Es gibt auch keine Lastpunktabsenkung. Die Energie wird durch die Energierückgewinnungssysteme, hier insbesondere Brems- und Schubrekuperation, erzeugt und deckt den Bordnetzbedarf ab.

Grundsätzlich ist ein möglichst breiter Zielladezustandsbereich 18 energetisch vorteilhaft, sodass die Regel gilt, den Zielladezustandsbereich so groß wie möglich und so klein wie nötig zu dimensionieren. Ungünstige Dimensionierungen führen zu einer Reduktion des Wirkungsgrads. Im Einzelnen:
Untere Reserve (Bereich 26) zu groß: Früherer Einsatz von Kraftstoff zur Erhaltung des Ladezustands SOC nötig.

Untere Reserve (Bereich 26) zu klein: Verbrauchersysteme können nicht mit ausreichend Energie aus der Energiespeichereinrichtung 10 versorgt werden, was wiederum zu einem höheren Einsatz von Kraftstoff führt.

Obere Reserve (Bereich 20) zu groß: Durchführung unnötiger Lastpunktabsenkungen. Eine Lastpunktabsenkung ist erst dann effizient, wenn dadurch vermieden wird, dass eine Energierückgewinnung wegen einer vollgeladenen Energiespeichereinrichtung 10 nicht mehr möglich ist. Ansonsten ist die Energiebilanz einer Lastpunktabsenkung nicht optimal. Die rückgewonnene Energie wird am besten eingesetzt, wenn sie direkt für den Bordnetzbedarf oder für die sonstigen Verbraucher genutzt wird und nicht für die Lastpunktabsenkung.

Obere Reserve (Bereich 20) zu klein: Von den Energierückgewinnungssystemen bereitgestellte Energie kann häufig nicht aufgenommen werden und geht somit verloren.

Die erfindungsgemäße Ladestrategie führt zu einer optimalen Einstellung des oberen und des unteren Schwellwerts oSW, uSW und damit zu einer optimalen Auslegung des oberen Bereichs 20, des Zielladezustandsbereichs 18 sowie des unteren Bereichs 26. Dadurch wird eine besonders effiziente Nutzung der Energiespeichereinrichtung 10 ermöglicht.

Die in Fig. 2 dargestellte Fahrt kann an einer Recheneinrichtung simuliert werden oder einem realen Kraftfahrzeug durchgeführt werden. Sie findet insbesondere nach einem genormten Fahrzyklus statt. Genormte Fahrzyklen sind dem Fachmann einschlägig bekannt.

Anstatt durch Ausprobieren unter Nutzung der erwähnten genormten Fahrzyklen kann auch durch abschnittsweises Integrieren der Lade- und Entladeströme über vorgebbare Zeitdauern eine optimale, für die Energierückgewinnungssysteme bereitzustellende sowie eine optimale, für Entladevorrichtungen bereitzustellende Energiemenge ermittelt werden.

Wird die Fahrt gemäß Fig. 2 an einem realen Kraftfahrzeug vorgenommen, wird automatisch dessen Ausstattungsvariante hinsichtlich Energierückgewinnungssysteme und Energieverbrauchssysteme berücksichtigt. Wird die Fahrt gemäß Fig. 2 simuliert, sind die zu berücksichtigenden Energieverbrauchs- und Energierückgewinnungssysteme bei der Simulation zu spezifizieren.

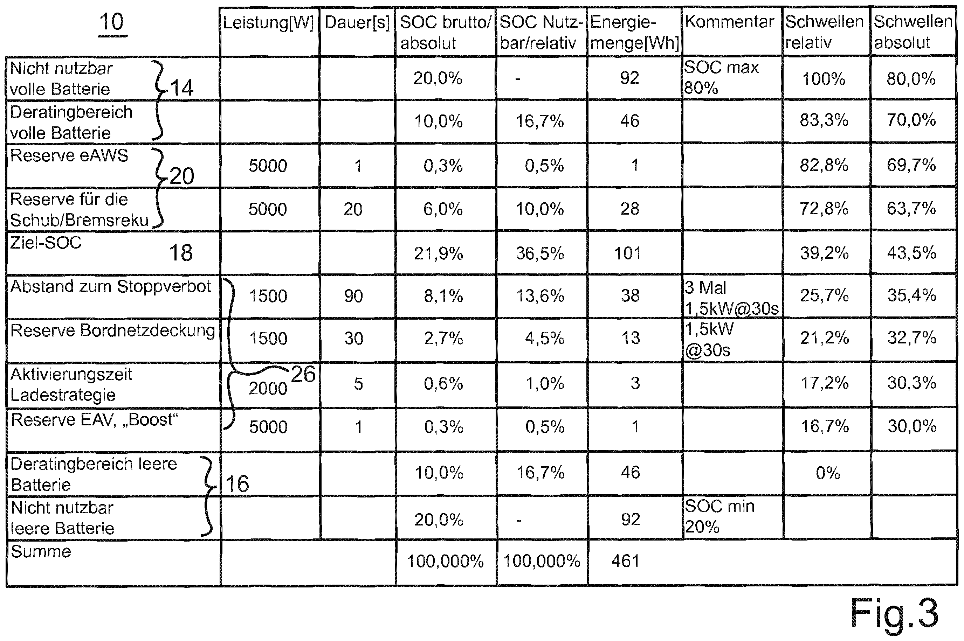

Während in der Darstellung von Fig. 2 jeweils der gesamte Batteriestrom $I_{Bat}$ dargestellt ist, kann dieser auch, insbesondere in der Simulation, für einzelne Energierückgewinnungs- und Energieverbrauchssysteme ermittelt werden. In diesem Zusammenhang wird auf Fig. 3 verwiesen. In der ersten Spalte der Tabelle von Fig. 3 ist die Bezeichnung des jeweiligen Energiebereichs der Energiespeichervorrichtung 10 angegeben, insbesondere auch durch Angabe, für welche Vorrichtung der jeweilige Energiebereich reserviert ist. Die zweite Spalte gibt die Leistung dieses Energiebereichs in W an, die dritte Spalte die Dauer der Aktivierung der zum jeweiligen Energiebereich gehörenden Vorrichtung innerhalb eines vorgebbaren Testzeitraums. Dieser kann beispielsweise 3 Minuten betragen. Die vierte Spalte gibt die für den jeweiligen Bereich gemäß der ersten Spalte zu reservierende Energiemenge in Prozent der Gesamtkapazität der Energiespeichereinrichtung 10 an, die fünfte Spalte dasselbe in Prozent des aktiv nutzbaren Bereichs (siehe Bezugszeichen 12 in Fig. 1). Die sechste Spalte gibt die zugehörige Energiemenge in Wh an, während in der siebten Spalte ein Kommentar zur Berechnung angegeben ist. Die achte und neunte Spalte geben die Schwellen relativ, bezogen auf den nutzbaren Bereich 12, bzw. absolut, bezogen auf die Gesamtkapazität der Energiespeichereinrichtung 10, an.

Für den oberen, nicht nutzbaren Bereich 14 sind in dem dargestellten Ausführungsbeispiel demnach 20% der Gesamtkapazität reserviert, für den unteren, nicht nutzbaren Bereich ebenfalls 20%. Ein oberer Deratingbereich ist mit 10% berücksichtigt, ein unterer Deratingbereich ebenfalls mit 10%. Zu den Energierückgewinnungsvorrichtungen: Die Reserve für eine elektromechanische aktive Wankstabilisierung (eAWS) beträgt absolut 0,3 %, relativ 0,5 %. Die Reserve für die Schub-/Bremsrekuperation beträgt 6,0 % absolut bzw. 10 % relativ. Die gemäß den Zeilen 1 bis 4 vorgesehenen Energiebereiche begrenzen den Ziel-SOC von oben.

Auf der Verbraucherseite ist berücksichtigt der Energievorhalt zur Aufrechterhaltung eines vorgebbaren zeitlichen Abstands zu einem Stoppverbot des Verbrennungsmotors. Da das Stoppverbot auch im Staubetrieb des Kraftfahrzeugs aufrechterhalten werden soll, wird vorliegend davon ausgegangen, dass die Energiespeichereinrichtung 10 den Energievorhalt in dem untersuchten Zeitbereich zumindest für drei StartStopp-Funktionen bereitstellen kann. Dies bedeutet, wenn der Verbrennungsmotor des Kraftfahrzeugs gestoppt wird, soll im Ausführungsbeispiel, siehe Spalte "Kommentar", frühestens nach 30 s ein erneuter Start des Verbrennungsmotors vorgenommen werden können, d.h. nach einem Stopp des Motors soll dieser mindestens 30 s aus sein, bevor er wieder gestartet werden muss, um die Batterie zu laden. Gemäß der Kommentarzeile ist hier während eines Zeitraums von 30 s ein durchschnittlicher Bordnetzverbrauch des spezifischen Fahrzeugs von 1,5 kW berücksichtigt.

Die Reserve für die Bordnetzabdeckung berücksichtigt, dass dann, wenn der Verbrennungsmotor ausgeschaltet wurde, beispielsweise beim erweiterten StartStopp oder beim FMA, dieser Ausschaltzustand über eine vorgebbare Mindestzeit aufrechterhalten werden kann, in der er nicht wegen Bedarf des Bordnetzes wieder gestartet werden muss. Hier ist, siehe Spalte "Kommentar", eine Zeitdauer von 30 s berücksichtigt, in der durchschnittlich 1,5 kW vom Bordnetz bereitgestellt werden müssen.

Die Reserve für die Aktivierungszeit Ladestrategie berücksichtigt, dass eine bestimmte Zeit nach einer Beschleunigungsphase oder nach einem kalten Motorstart der Riemenstartergenerator nicht sofort einsetzbar ist, da dies beispielsweise mit unerwünscht starken Vibrationen einhergehen würde. Die Zeitdauer, bis der Riemenstartergenerator einsetzbar ist, muss daher von der Energiespeichereinrichtung 10 übernommen werden.

Weiterhin wird für einen elektronischen Abgasverdichter zur Bereitstellung einer Boost-Funktion eine Energiemenge bereitgestellt.

Durch die Addition der unteren, nicht nutzbaren Bereiche, der für die vorgegebenen Verbraucher zu reservierenden Energiebereiche, sowie optional des unteren Deratingbereichs, wird der untere Schwellwert uSW des Ziel-SOCs 18 festgelegt Der absolute untere Schwellwert uSW des Ziel-SOCs beträgt vorliegend 43,5 %, die relative untere Schwellwert 39,2 %. Der obere Schwellwert oSW für den Ziel-SOC 18 beträgt im vorliegenden Ausführungsbeispiel relativ 72,8 %, absolut 63,7 %. Die Breite des Ziel-SOCs 18 beträgt demnach absolut 21,9 %, relativ 36,5 %.

Wie der Darstellung von Fig. 3 zu entnehmen ist, ergeben sich bei unterschiedlicher Fahrzeugausstattung andere obere und untere Schwellwerte oSW, uSW bzw. eine andere Breite des Ziel-SOCs. 18

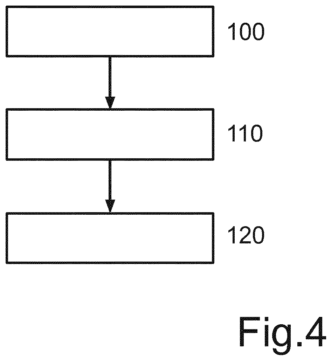

Fig. 4 zeigt in schematischer Darstellung ein Signalablaufdiagramm für ein Ausführungsbeispiel eines erfindungsgemäßen Verfahrens. Demnach wird in Schritt 100 durch eine Ladezustandssteuereinrichtung 32 der Energiespeichereinrichtung 10 ein Ladezustand der Energiespeichereinrichtung 10 zwischen einem oberen und einem unteren Schwellwert oSW, uSW für einen Zielladezustandsbereich 18 der Energiespeichereinrichtung 10 eingestellt. In Schritt 110 wird während mindestens einer Fahrt mindestens ein Lade- und ein Entladevorgang mit Bezug auf mit der Energiespeichereinrichtung 10 ausgetauschte Energiemengen überwacht und daraus mit einer vorgebbaren Wahrscheinlichkeit zu erwartende Energiemengen für zukünftige Lade- und Entladevorgänge ermittelt. Schließlich wird in Schritt 120 basierend auf den Ermittlungen von Schritt 110 der obere und der untere Schwellwert oSW, uSW für den Zielladezustandsbereich 10 der Energiespeichereinrichtung 10 festgelegt.

## Patentansprüche

1. Verfahren zum Steuern einer Energiespeichereinrichtung (10) eines Mild-Hybrid-Kraftfahrzeugs, wobei die Energiespeichereinrichtung (10) eine Gesamtkapazität aufweist, folgende Schritte umfassend:

   a) durch eine Ladezustandssteuereinrichtung (32) der Energiespeichereinrichtung (10) wird ein Ladezustand der Energiespeichereinrichtung (10) zwischen einem oberen (oSW) und einem unteren Schwellwert (uSW) für einen Zielladezustandsbereich (18) der Energiespeichereinrichtung (10) eingestellt,
   b) während mindestens einer Fahrt werden mindestens ein Lade- (34) und ein Entladevorgang (36) mit Bezug auf mit der Energiespeichereinrichtung (10) ausgetauschte Energiemengen überwacht und daraus mit einer vorgebbaren Wahrscheinlichkeit zu erwartende Energiemengen für zukünftige Lade- und Entladevorgänge ermittelt, wobei die vorgebbare Wahrscheinlichkeit derart festgelegt ist, dass der Zielladezustandsbereich (18) derart festzulegen ist, dass der Ladezustand nur in weniger als 10% einer vorgebbaren Zeitdauer außerhalb des Zielladezustandsbereichs (18) liegt, und
   c) basierend auf den Ermittlungen von Schritt b) werden der obere (oSW) und der untere Schwellwert (uSW) für den Zielladezustandsbereich (18) der Energiespeichereinrichtung (10) festgelegt,
   wobei bei der Festlegung in Schritt c) ein oberer, nicht nutzbarer Ladebereich (14) der Energiespeichereinrichtung (10) und ein unterer, nicht nutzbarer Ladebereich (16) der Energiespeichereinrichtung (10) sowie weiterhin ein oberer, nicht nutzbarer Deratingbereich und ein unterer, nicht nutzbarer Deratingbereich der Energiespeichereinrichtung (10) berücksichtigt werden, wobei sich der Deratingbereich vom nicht nutzbaren Bereich dadurch unterscheidet, dass der Deratingbereich prinzipiell genutzt werden kann, seine Nutzung aber möglichst vermieden werden sollte, da im Deratingbereich eine Leistung der Energiespeichereinrichtung (10) reduziert ist, wobei in Schritt c) der obere Schwellwert (oSW) für den Zielladezustandsbereich (18) festgelegt wird wie folgt:

oberer Schwellwert (oSW) = Gesamtkapazität – (oberer, nicht nutzbarer Ladebereich (14)) – (erwartete Energiemenge für Ladevorgänge gemäß Schritt b))

und

in Schritt c) der untere Schwellwert (uSW) für den Zielladezustandsbereich (18) festgelegt wird wie folgt:

unterer Schwellwert (uSW) = unterer, nicht nutzbarer Ladebereich (16) + (erwartete Energiemenge für Entladevorgänge gemäß Schritt b)).

2. Verfahren nach Anspruch 1,
**dadurch gekennzeichnet, dass**
die mindestens eine Fahrt in Schritt b) an einer Recheneinrichtung simuliert wird.

3. Verfahren nach Anspruch 1,
**dadurch gekennzeichnet, dass**
die mindestens eine Fahrt in Schritt b) an einem realen Kraftfahrzeug durchgeführt wird.

4. Verfahren nach einem der vorhergehenden Ansprüche,
**dadurch gekennzeichnet, dass**
die mindestens eine Fahrt nach einem vorgebbaren, insbesondere genormten Fahrzyklus durchgeführt wird.

5. Verfahren nach einem der vorhergehenden Ansprüche,
**dadurch gekennzeichnet, dass**
Schritt b) vor Auslieferung des Kraftfahrzeugs und/oder fortlaufend, insbesondere in vorgebbaren zeitlichen Abständen oder zu vorgebbaren Ereignissen, während der Benutzung des Kraftfahrzeugs durchgeführt wird.

6. Verfahren nach einem der vorhergehenden Ansprüche,
**dadurch gekennzeichnet, dass**
in Schritt b) als Ladevorgang (34) mindestens einer der folgenden Ladevorgänge erfasst wird:

- Laden durch ein elektrisches Fahrwerk (40) ,
- Laden durch eine Schub- und/oder Bremsrekuperationsvorrichtung (40),
- Laden durch eine elektromechanische aktive Wankstabilisierung (40).

7. Verfahren nach einem der vorhergehenden Ansprüche,
**dadurch gekennzeichnet, dass**
in Schritt b) als Entladevorgang (36) mindestens einer der folgenden Entladevorgänge erfasst wird:

- Entladen durch einen elektronischen Abgasverdichter (38),
- Entladen durch das Bordnetz (38),
- Entladen zur Aufrechterhaltung eines vorgebbaren zeitlichen Abstands zu einem Stoppverbot eines Verbrennungsmotors des Kraftfahrzeugs,
- Entladen während einer Aktivierungszeit eines Riemenstartergenerators des Kraftfahrzeugs, in der dieser nicht für Ladevorgänge bereitsteht.

8. Verfahren nach einem der vorhergehenden Ansprüche,
**dadurch gekennzeichnet, dass**
Schritt b) in Abhängigkeit der Fahrzeugausstattung durchgeführt wird und in Schritt c) der obere (oSW) und untere Schwellwert (uSW) für den Zielladezustandsbereich (18) in Abhängigkeit der Fahrzeugausstattung festgelegt wird.

**Claims**

1. Method for controlling an energy storage device (10) of a mild-hybrid-motor vehicle, wherein the energy storage device (10) has a total capacity, comprising the following steps:

a) by a state-of-charge control device (32) of the energy storage device (10) a state-of-charge of the energy storage device (10) is set between an upper threshold (oSW) and a lower threshold (uSW) for a target state-of-charge range (18) of the energy storage device (10),

b) during at least one journey at least one charging process (34) and one discharging process (36) are monitored with reference to energy quantities exchanged with the energy storage device (10), and from the latter energy quantities to be expected for future charging and discharging processes are determined with a predeterminable probability, wherein the predeterminable probability is set in such a way that the target state-of-charge range (18) is to be set such that the state-of-charge is outside the target state-of-charge range (18) only in less than 10% of a predeterminable time period, and

c) based on the determinations of step b) the upper threshold (oSW) and the lower threshold (uSW) for the target state-of-charge range (18) of the energy storage device (10) are determined,

in the determination in step c) an upper, unusable charging range (14) of the energy storage device (10) and a lower, unusable charging range (16) of the energy storage device (10) and further an upper, unusable derating range and a lower, unusable derating range of the energy storage device (10) are taken into account, wherein the derating range differs from the unusable range in that the derating range can be used in principle, but its use should be avoided as far as possible, since an output power of the energy storage device (10) is reduced in the derating range, wherein in step c) the upper threshold (oSW) for the target state-of-charge range (18) is determined as follows:

$$\text{upper threshold (oSW)} = \text{total capacity} - (\text{upper, unusable charging range (14)})$$
$$- (\text{expected amount of energy for charging processes according to step b)})$$

and

in step c) the lower threshold (uSW) for the target state-of-charge range (18) is determined as follows:

$$\text{lower threshold (uSW)} = \text{lower, unusable charging range (16)} + (\text{expected amount}$$
$$\text{of energy for discharging processes according to step b)}).$$

2. Method according to claim 1,
   **characterised in that**
   the at least one journey is simulated in step b) on a computing device.

3. Method according to claim 1,
   **characterised in that**
   the at least one journey is performed in step b) in a real motor vehicle.

4. Method according to any of the preceding claims,
   **characterised in that**
   the at least one journey is performed according to a predeterminable, in particular standardised, driving cycle.

5. Method according to any of the preceding claims,
   **characterised in that**
   step b) is carried out before the delivery of the motor vehicle and/or continuously, in particular at predefinable time intervals or at predefinable events during the use of the motor vehicle.

6. Method according to any of the preceding claims,
   **characterised in that**
   in step b) at least one of the following charging processes is detected as the charging process (34):

   - charging by an electrical chassis (40),
   - charging by a thrust and/or brake recuperation device (40),
   - charging by an electromechanical active roll stabilisation (40).

7. Method according to any of the preceding claims,

**characterised in that**

in step b) at least one of the following discharge processes is detected as the discharge process (36):

- discharging through an electronic exhaust gas compressor (38),
- discharging through the on-board electrical system (38),
- discharging to maintain a predeterminable time interval from a stop prohibition of an internal combustion engine of the motor vehicle,
- discharging during an activation time of a belt starter generator of the motor vehicle, in which the latter is not available for charging operations.

8. Method according to any of the preceding claims,
   **characterised in that**
   step b) is carried out as a function of the vehicle equipment and in step c) the upper threshold (oSW) and lower threshold value (uSW) for the target state-of-charge range (18) is determined as a function of the vehicle equipment.

## Revendications

1. Procédé de commande d'un appareil d'accumulation d'énergie (10) d'un véhicule automobile semi-hybride, dans lequel l'appareil d'accumulation d'énergie (10) présente une capacité entière, comprenant les étapes suivantes :

   a) un état de charge de l'appareil d'accumulation d'énergie (10) est réglé par un appareil de commande d'état de charge (32) de l'appareil d'accumulation d'énergie (10) entre une valeur seuil supérieure (oSW) et une valeur seuil inférieure (uSW) pour une zone d'état de charge cible (18) de l'appareil d'accumulation d'énergie (10),
   b) pendant au moins un déplacement, au moins une opération de recharge (34) et une opération de décharge (36) sont surveillées par rapport aux quantités d'énergie échangées avec l'appareil d'accumulation d'énergie (10) et sont calculées à partir de celles-ci avec des quantités d'énergie à attendre avec une probabilité prédéfinissable pour des opérations de recharge et de décharge futures, dans lequel la probabilité prédéfinissable est fixée de telle manière que la zone d'état de charge cible (18) soit à fixer de telle manière que l'état de charge se trouve seulement dans moins de 10 % d'une durée prédéfinissable en dehors de la zone d'état de charge cible (18), et
   c) sur la base des calculs de l'étape b) la valeur seuil supérieure (oSW) et la valeur seuil inférieure (uSW) sont fixées pour la zone d'état de charge cible (18) de l'appareil d'accumulation d'énergie (10),
   dans lequel lors de la fixation à l'étape c) une zone de charge (14) supérieure inutilisable de l'appareil d'accumulation d'énergie (10) et une zone de charge (16) inférieure inutilisable de l'appareil d'accumulation d'énergie (10) ainsi qu'en outre une zone de déclassement supérieure, inutilisable et une zone de déclassement inférieure, inutilisable de l'appareil d'accumulation d'énergie (10) sont prises en considération, dans lequel la zone de déclassement se distingue de la zone inutilisable du fait que la zone de déclassement puisse être utilisée en principe, mais son utilisation devrait être évitée si possible car une puissance de l'appareil d'accumulation d'énergie (10) est réduite dans la zone de déclassement, dans lequel à l'étape c) la valeur seuil supérieure (oSW) est fixée pour la zone d'état de charge cible (18) comme suit :

   valeur seuil supérieure (oSW) = capacité entière - (zone de charge (14) supérieure, inutilisable)) - (quantité d'énergie attendue pour des opérations de recharge selon l'étape b))

   et
   à l'étape c) la valeur seuil inférieure (uSW) est fixée pour la zone d'état de charge cible (18) comme suit :

   valeur seuil inférieure (uSW) = zone de charge (16) inférieure, inutilisable + (quantité d'énergie attendue pour des opérations de décharge selon l'étape b)).

2. Procédé selon la revendication 1,
   **caractérisé en ce que**
   l'au moins un déplacement dans l'étape b) est simulé au niveau d'un appareil de calcul.

**3.** Procédé selon la revendication 1,
**caractérisé en ce que**
l'au moins un déplacement dans l'étape b) est réalisé au niveau d'un véhicule automobile réel.

**4.** Procédé selon l'une quelconque des revendications précédentes,
**caractérisé en ce que**
l'au moins un déplacement est réalisé selon un cycle de déplacement prédéfinissable, en particulier normé.

**5.** Procédé selon l'une quelconque des revendications précédentes,
**caractérisé en ce que**
l'étape b) est réalisée avant la livraison du véhicule automobile et/ou en continu, en particulier dans des intervalles temporels prédéfinissables ou à des événements prédéfinissables, pendant l'utilisation du véhicule automobile.

**6.** Procédé selon l'une quelconque des revendications précédentes,
**caractérisé en ce que**
à l'étape b) comme opération de recharge (34) au moins une des opérations de recharge suivantes est détectée :

- recharge par un train de roulement (40) électrique,
- recharge par un dispositif de récupération de poussée et/ou de freinage (40),
- recharge par une stabilisation au roulis (40) active électromécanique.

**7.** Procédé selon l'une quelconque des revendications précédentes,
**caractérisé en ce que**
à l'étape b) comme opération de décharge (36) au moins une des opérations de décharge suivantes est détectée :

- décharge par un compresseur de gaz d'échappement (38) électronique,
- décharge par le réseau de bord (38),
- décharge pour le maintien d'une distance temporelle prédéfinissable pour une interdiction d'arrêt d'un moteur à combustion interne du véhicule automobile,
- décharge pendant un temps d'activation d'un générateur de démarreur à courroie du véhicule automobile, dans lequel celui-ci n'est pas prêt pour des opérations de recharge.

**8.** Procédé selon l'une quelconque des revendications précédentes,
**caractérisé en ce que**
l'étape b) est réalisée en fonction de l'équipement de véhicule et à l'étape c) les valeur seuil supérieure (oSW) et inférieure (uSW) sont fixées pour la zone d'état de charge cible (18) en fonction de l'équipement de véhicule.

Fig.1

Fig.2

| | Linie | Name | Cursor 1 | Cursor 2 |
|---|---|---|---|---|
| 1 | – – – | oSW | 30° | 30° |
| 2 | – – | uSW | 60° | 60° |
| 3 | —— | $I_{Bat}$ | -16° | 69° |
| 4 | ······· | FP | 35,3516° | 0° |
| 5 | – – – | v | 103,1° | 99,71° |
| 6 | ······· | SOC | 35,47° | 36,81° |

EP 3 448 713 B1

| 10 | Leistung[W] | Dauer[s] | SOC brutto/ absolut | SOC Nutz-bar/relativ | Energie-menge[Wh] | Kommentar | Schwellen relativ | Schwellen absolut |
|---|---|---|---|---|---|---|---|---|
| Nicht nutzbar volle Batterie ⎫14 | | | 20,0% | - | 92 | SOC max 80% | 100% | 80,0% |
| Deratingbereich volle Batterie ⎭ | | | 10,0% | 16,7% | 46 | | 83,3% | 70,0% |
| Reserve eAWS ⎫20 | 5000 | 1 | 0,3% | 0,5% | 1 | | 82,8% | 69,7% |
| Reserve für die Schub/Bremsreku ⎭ | 5000 | 20 | 6,0% | 10,0% | 28 | | 72,8% | 63,7% |
| Ziel-SOC          18 | | | 21,9% | 36,5% | 101 | | 39,2% | 43,5% |
| Abstand zum Stoppverbot ⎫ | 1500 | 90 | 8,1% | 13,6% | 38 | 3 Mal 1,5kW@30s | 25,7% | 35,4% |
| Reserve Bordnetzdeckung | 1500 | 30 | 2,7% | 4,5% | 13 | 1,5kW @30s | 21,2% | 32,7% |
| Aktivierungszeit Ladestrategie ⎭26 | 2000 | 5 | 0,6% | 1,0% | 3 | | 17,2% | 30,3% |
| Reserve EAV, „Boost" | 5000 | 1 | 0,3% | 0,5% | 1 | | 16,7% | 30,0% |
| Deratingbereich leere Batterie ⎫16 | | | 10,0% | 16,7% | 46 | | 0% | |
| Nicht nutzbar leere Batterie ⎭ | | | 20,0% | - | 92 | SOC min 20% | | |
| Summe | | | 100,000% | 100,000% | 461 | | | |

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014009448 A1
- CA 2397074 A1
- US 20150168259 A1
- WO 0025417 A
- DE 102013112678 A1
- DE 102010034444 A1